# EUROPÄISCHE PATENTSCHRIFT

(11) **EP 2 509 842 B1**
(45) Veröffentlichungstag und Bekanntmachung des Hinweises auf die Patenterteilung: **15.01.2014**
(21) Anmeldenummer: 10805593.0
(22) Anmeldetag: 08.12.2010
(51) Int. Cl.: B61B 1/02, E05F 17/00

(54) **SYSTEM ZUR GEMEINSAMEN STEUERUNG VON TÜREN EINER BAHNSTEIGWAND UND EINES FAHRZEUGES; INSBESONDERE EINES SCHIENENFAHRZEUGES; FAHRZEUGTÜRSYSTEM; BAHNSTEIGWAND SOWIE VERFAHREN ZUR STEUERUNG DES SYSTEMS**
SYSTEM FOR JOINTLY CONTROLLING DOORS OF A PLATFORM WALL AND OF A VEHICLE, IN PARTICULAR OF A RAIL VEHICLE; VEHICLE DOOR SYSTEM, PLATFORM WALL; AND METHOD FOR CONTROLLING THE SYSTEM
SYSTEME DE COMMANDE COMMUNE DE PORTES D'UNE PAROI DE QUAI ET D'UN VEHICULE, EN PARTICULIER D'UN VEHICULE SUR RAILS, SYSTEME DE PORTE DE VEHICULE, PAROI DE QUAI AINSI QUE PROCEDE DE COMMANDE DU SYSTEME

(30) Priorität: 09.12.2009 DE 102009044843
(43) Veröffentlichungstag der Anmeldung: 17.10.2012
(73) Patentinhaber: Pintsch Bamag Antriebs- und Verkehrstechnik GmbH, 46537 Dinslaken (DE)
(72) Erfinder: KASNER, Matthias, 46562 Voerde (DE); RADCZIMANOWSKI, Günter, 46569 Hünxe (DE)
(74) Vertreter: CBDL Patentanwälte
(86) Internationale Anmeldenummer: PCT/DE2010/075159
(87) Internationale Veröffentlichungsnummer: WO 2011/069503

(56) Entgegenhaltungen:
- DE-A1- 2 910 260
- DE-C1- 19 625 193
- US-A- 4 551 944

## Beschreibung

### TECHNISCHES GEBIET DER ERFINDUNG

Die Erfindung betrifft ein System zur gemeinsamen Steuerung von Türen einer Bahnsteigwand und eines Fahrzeuges, insbesondere eines Schienenfahrzeuges, ein mit einem entsprechenden System ausgestattetes Fahrzeugtürsystem, eine mit einem entsprechenden System ausgestattete Bahnsteigwand sowie ein Verfahren zur Steuerung des Systems.

### HINTERGRUND DER ERFINDUNG

Auf dem Gebiet der Erfindung sind u.a. Türsteuerungssysteme für Fahrzeuge, insbesondere Schienenfahrzeuge bekannt. Sie dienen dazu, das Öffnen oder das Schließen der Türen des Fahrzeuges zu steuern, wenn ein Fahrzeug eine Haltestelle erreicht hat bzw. eine Haltestelle verlassen möchte, um Reisenden das Ein- und Aussteigen bzw. dem Fahrzeug die Weiterfahrt zu ermöglichen. Solche Systeme werden normalerweise von einem Fahrer, einem Zugführer oder Schaffner bedient. Bei einer Freigabe der Türen werden diese entweder alle geöffnet, oder bei bestimmten Systemen auf Anforderung eines Reisenden, der ein- oder aussteigen möchte und dies z.B. durch Drücken eines entsprechenden Signalisierungsknopfes angezeigt hat, individuell geöffnet. Beim Schließen werden alle offenen Türen gleichzeitig geschlossen. Die Türen werden normalerweise mit Vorrichtungen wie Lichtschranken, Sensorleisten usw. versehen, um ein Einklemmen von Personen oder Gegenständen zwischen den Türen zu vermeiden.

Bei unterirdischen U-Bahn-Bahnhöfen, in sehr warmen oder sehr kalten Ländern auch bei überirdischen Bahnhöfen, werden in zunehmendem Maße Bahnsteige gebaut, welche durch Wände vom Gleisbereich getrennt sind. Solche Wände sind mit Türen versehen, um das ein Ein- und Aussteigen aus den Fahrzeugen zu ermöglichen. Vorteilhaft ist dabei, daß einerseits die Sicherheit erhöht wird, weil der Gleisbereich für Reisende nicht mehr zugänglich ist und dadurch die Gefahr, in den Gleisbereich zu gelangen, drastisch gesenkt wird. Gleichzeitig wird damit eine energetisch günstige Klimatisierung des Bahnsteigbereichs möglich.

Bei den bekannten Systemen erfolgt das Öffnen und Schließen der Türen des Fahrzeugs und der Bahnsteigwand durch Fahrzeugpersonal bzw. Bahnhofspersonal. Dabei kommt es oft zu Unfällen oder Unannehmlichkeiten, z.B. weil Reisende zwischen sich schließenden Türen eingeklemmt werden oder bei einem Defekt einer Fahrzeugtür oder einer Tür der Bahnsteigwand nur die der jeweils defekten Tür gegenüberliegende Tür der Bahnsteigwand bzw. des Fahrzeugs geöffnet oder geschlossen wird und das Verlassen/Betreten des Zuges dann an dieser Stelle nicht möglich ist, so daß der Reisende zwischen Fahrzeug und Bahnsteig gelangen kann.

Die DE 10 2004 045 558 beschreibt ein Verfahren zur Steuerung von Türen eines Schienenfahrzeugs und der korrespondierenden Türen einer Bahnsteigwand, bei welchem die Türverfügbarkeit des Fahrzeugs und der Bahnsteigwand vor dem Halt am nächsten Bahnhof über einen funkgestützten Übertragungskanal zwischen Fahrzeug und Bahnsteig übertragen, aufbereitet und einem Fahrgast-Informationssystem im Fahrzeug bzw. am Bahnsteig übermittelt wird. Am Bahnsteig soll dann eine Kommunikation zwischen korrespondierenden Türen direkt über eine IR-Schnittstelle erfolgen.

In der GB 2436 152 wird eine Vorrichtung zum Steuern von Türen eines Schienenfahrzeugs und einer Bahnsteigwand beschrieben, wobei jeder Tür des Fahrzeugs und jeder Tür der Bahnsteigwand jeweils ein eigener Transceiver zugeordnet ist. Die Kommunikation zwischen einer Tür des Fahrzeugs und einer Tür der Bahnsteigwand erfolgt auf direktem Weg über den jeweiligen Transceiver, wobei die Steuerbefehle der Türen fahrzeugseitig erfolgen.

In der DE 196 25 193 C1 wird eine Vorrichtung zur automatischen Steuerung von korrespondierenden Türen eines Verkehrssystems gelehrt. Dabei kommt es zu einer direkten Übertragung von Steuersignalen zwischen den korrespondierenden Türen, die sich mittels eines Telegrammverkehrs austauschen, d.h. die Türen erkennen sich gegenseitig selbständig und kommunizieren direkt miteinander: Die Türsteuerung agiert ebenfalls selbständig, während die Zentralsteuereinheiten lediglich Zustandsmeldungen empfängt und alle Anläufe koordiniert.

Bei den bekannten Lösungen ist für die Kommunikation zwischen den korrespondierenden Türen jeweils eine Schnittstelle pro Tür notwendig. Sobald die Kommunikation über diese Schnittstelle erfolgt, sind die jeweiligen Zentralsteuereinheiten von der Kommunikation ausgeschlossen. Eine Türzustanderkennung ist für die Zentralsteuereinheit nur auf Anfrage möglich.

Ein weiteres Problem bei den bekannten Lösungen ist, daß die Türen hinsichtlich des Einklemmschutzes autark sind, d.h., daß bei einer Hinderniserkennung seitens einer Tür diese automatisch wieder öffnet, wobei die jeweilige korrespondierende Tür geschlossen bleibt. Dies kann zu Unfällen führen, wenn z.B. eine Bahnsteigtür wegen einer Hinderniserkennung beim Schließen wieder öffnet, während die Fahrzeugtür den Schließvorgang beendet und dann geschlossen bleibt.

Es ist erwünscht, vor allem bei Schnell- und U-Bahnen, daß solche Probleme vermieden werden, insbesondere weil man auf die Einhaltung eines strikten Fahrplanes angewiesen ist und Zeitverluste auf ein Minimum reduziert werden sollen.

### OFFENBARUNG DER ERFINDUNG

Aufgabe der Erfindung ist es, Systeme und deren Teile zur Steuerung von Türen eines Fahrzeuges, insbesondere eines Schienenfahrzeuges, und einer Bahnsteigwand anzugeben, die eine schnelle, sichere und präzise Türsteuerung sicherstellen können und preiswert und einfach nachrüstbar sind.

Die Aufgabe wird gelöst von einem System mit den Merkmalen des Anspruchs 1, einem Fahrzeugtürsystem mit den Merkmalen des Anspruchs 8, einer Bahnsteigtrennwand mit den Merkmalen des Anspruchs 10 sowie einem Verfahren mit den Merkmalen des Anspruchs 12.

Die Erfindung bietet den Vorteil, daß eine Kommunikation zwischen beiden Türsteuersystemen möglich ist und z.B. die Fahrzeugtüren wissen, in welchem Zustand sich die jeweiligen Türen der Bahnsteigwand befinden.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNGEN

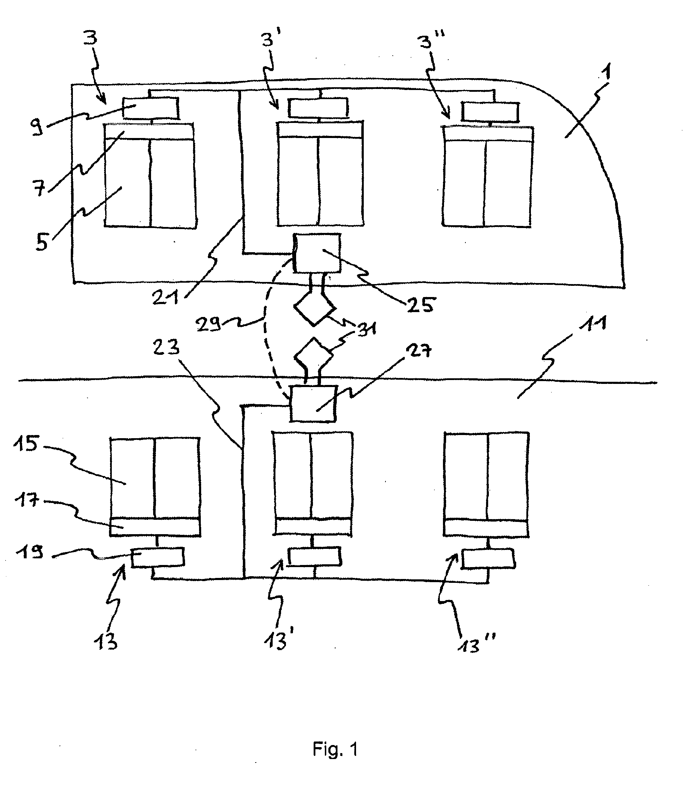

- Fig. 1: zeigt schematisch eine vorteilhafte Ausführungsform eines erfindungsgemäßen Systems.

### BESCHREIBUNG BEVORZUGTER AUSFÜHRUNGSFORMEN

In der Fig. 1. ist schematisch eine vorteilhafte Ausführung eines erfindungsgemäßen Systems gezeigt. Ein Fahrzeug 1 besitzt dabei rein beispielhaft drei Kombinationen 3, 3', 3" aus einer Fahrzeugtür 5 mit jeweils einem ersten Stellglied 7 zum Öffnen, Schließen, Stoppen, Verriegeln und/oder Entriegeln der Fahrzeugtür 5 und einer ersten Steuereinheit 9 zur Steuerung des ersten Stellgliedes 7. In der Praxis kann das Fahrzeug deutlich mehr solcher Kombinationen aufweisen.

Die Bahnsteigwand 11 besitzt im gezeigten Beispiel ebenfalls drei Kombinationen 13, 13', 13" aus einer Tür 15 der Bahnsteigwand 11 mit jeweils einem zweiten Stellglied 17 zum Öffnen, Schließen, Stoppen, Verriegeln und/oder Entriegeln der Tür 15 der Bahnsteigwand 11 und einer zweiten Steuereinheit 19 zur Steuerung des zweiten Stellgliedes 17. Auch die Bahnsteigwand kann in der Praxis deutlich mehr solcher Kombinationen aufweisen.

Das Fahrzeug 1 kann Teil einer Fahrzeugkombination mit Triebwagen und Wagons sein, wobei die Anzahl der Türen 15 der Bahnsteigwand 11 der Anzahl der Türen 5 der Fahrzeugkombination nicht angepaßt sein muß.

Jede der ersten bzw. zweiten Steuereinheiten 9, 19 ist über erste bzw. zweite Kommunikationsverbindungen 21, 23 mit einer ersten bzw. zweiten Zentralsteuereinheit 25, 27 verbunden, die über entsprechende, an sich bekannte und deshalb hier nicht dargestellte Mittel aufgebaut wird. Die Zentralsteuereinheiten 25, 27 sind jeweils ausgebildet, um über die ersten bzw. zweiten Kommunikationsverbindungen 21, 23 und die ersten bzw. zweiten Steuereinheiten 9, 19 die Steuerung eines ersten bzw. zweiten Satzes der ersten bzw. zweiten Stellglieder 7, 17 auszulösen.

Die erste und die zweite Zentralsteuereinheit 25, 27 sind miteinander über eine dritte Kommunikationsverbindung 29 verbunden, die über entsprechende Mittel aufgebaut wird, wobei die Mittel vorzugsweise so ausgestaltet sind, daß sie eine drahtlose Kommunikationsverbindung 29 ermöglichen. Die Kommunikationsverbindung 29 dient zur Kommunikation zwischen den ersten und zweiten Zentralsteuereinheiten 25, 27, so daß Steuerbefehle betreffend Fahrzeugtüren und Türen der Bahnsteigwand zwischen Fahrzeug und Bahnsteigwand ausgetauscht werden können. Die Steuerbefehle umfassen sowohl Befehle zum Öffnen und Schließen der Türen als auch Zustandmeldungen wie "Tür öffnet", "Tür schließt", "Tür geöffnet", "Tür geschlossen", "Tür notentriegelt", "Tür gesperrt" sowie ggf. Meldungen über auftretende Störungen. Dadurch wird die Funktionssicherheit und Verläßlichkeit des Systems erhöht.

Bei der gezeigten Ausführungsform der Erfindung ist jede der Zentralsteuereinheiten 25 und 27 mit einer Antenne 31 ausgestattet. Dabei handelt es sich vorzugsweise um eine Induktionsantenne. Damit wird gewährleistet, daß die dritte Kommunikationsverbindung 29 eine vorgegebene maximale Reichweite zwischen beiden Antennen 31 hat, so daß nur dann, wenn Fahrzeug und Bahngleis relativ zueinander eine korrekte Position mit einer vordefinierbaren Toleranz aufweisen, d.h. wenn die Türen des Fahrzeugs und des Bahnsteigs einen Durchgang gewährleisten können, eine Verbindung zwischen beiden Zentralsteuereinheiten 25 und 27 besteht. Die Kommunikationsverbindung 29 erfolgt vorzugsweise im Niederfrequenzbereich zwischen 50 und 200 kHz, z.B. mit 125 kHz, so daß die Verbindung nicht von Mobiltelefonen, WLAN-Netzen, Bluetoothverbindungen usw. gestört werden kann, und hat typischerweise eine maximale Reichweite (im Sinne einer für guten Empfang ausreichenden Signaistärke) von etwa 60 - 80 cm.

Bei dem Aufbau der Kommunikationsverbindung 29 werden aus den ersten und zweiten Kombinationen 3, 3', 3" und 13, 13', 13" Paare aus je einer der Fahrzeugtüren 5 und einer der Türen 15 der Bahnsteigwand 11 gebildet, damit ein Durchgang zwischen Bahnsteig und Fahrzeug und umgekehrt möglich ist.

Die Paarbildung ist erfindungsgemäß nicht vorher festgelegt. Zum Beispiel kann die Anzahl der Türen 5 einer Fahrzeugkombination größer als die Anzahl der Türen 15 einer Bahnsteigwand sein, wobei dann nur solche Paare gebildet werden, die einen Durchgang bilden können.

Vorzugsweise sind an den Türen bzw. unmittelbar in der Nähe der Türen des Fahrzeugs bzw. der Bahnsteigwand optische und/oder akustische Signaleinrichtungen angebracht, die mit der Zentralsteuereinheit 25 bzw. 27 verbunden sind und den momentanen Zustand der Türen wiedergeben können, wie beispielsweise, daß die Tür gerade öffnet oder schließt, wie lange eine Tür noch offen bleibt oder daß die Tür gerade außer Betrieb ist. Zusätzlich können weitere Informationen für Fahrgäste wiedergegeben werden, wie z.B. Ziel, Linie, Verspätungen usw.

Anhand der Stärke der Kommunikationsverbindung 29 kann auch ermittelt werden, wie groß der Versatz zwischen der Antenne 31 der Zentralsteuereinheit 25 und der Antenne 31 der Zentralsteuereinheit 27 ist, so daß ggf. bei einem festgelegten, zu großen Versatz beider Antennen 31 die Kommunikationsverbindung 29 zwar aufgebaut wird, diese aber nicht zur Steuerung der gebildeten Paare führt, da diese nicht oder nur teilweise einen Durchgang gewährleisten können.

Vorteilhaft werden beim zu großen Versatz Maßnahmen eingeleitet zur Behebung des Problems. Beispielsweise kann einem Fahrzeugführer angezeigt werden, daß er ggf. vor- oder zurückfahren sollte. Bei automatisch betriebenen Fahrzeugen kann eine solche Anpassung automatisch erfolgen. Eine vorteilhafte Ausführungsform sieht vor, daß die Stärke der Kommunikationsverbindung 29 während des Aufbaus derselben beim Einfahren eines Fahrzeugs 1 kontinuierlich gemessen wird, bis diese ihr Maximum erreicht hat. Das Erreichen des Maximums bedeutet, daß das Fahrzeug 1 bezüglich der Bahnsteigwand 11 korrekt positioniert ist.

Die Kommunikationsverbindung 29 bleibt bis zum Verlassen des Bahnsteigs bestehen, so daß Zustandsänderungen jederzeit von den Zentralsteuereinheiten 25 und 27 erkannt und weitergeleitet werden können. Damit wird nicht nur eine extreme Flexibilität, sondern auch eine erhöhte Sicherheit und Benutzerfreundlichkeit des Systems gewährleistet.

Wenn beim Schließen einer Tür ein Gegenstand oder eine Person im Türbereich eines Fahrzeuges eingeklemmt ist, wird ein entsprechendes Signal von der Steuereinheit der betreffenden Fahrzeugtür zu der Zentralsteuereinheit 25 übertragen. Über die dritte Kommunikationsverbindung 29 wird das Signal gleichzeitig zu der anderen Zentralsteuereinheit 27 übertragen, die das Signal zu der entsprechenden Steuereinheit der Tür der Bahnsteigwand überträgt. Somit sind Fahrzeug 1 und Bahnsteigwand 11 in Kenntnis, daß bei einem Türpaar eine Störung aufgetreten ist. Als Antwort werden die betreffende Fahrzeugtür und die betreffende Tür der Bahnsteigwand synchron gesteuert, damit beide geöffnet werden. Gleichzeitig können die anderen, nicht von der Störung betroffenen Türpaare geschlossen bleiben.

Die gezeigte Ausführungsform der Erfindung realisiert die Kommunikationsverbindungen 21 und 23 als BUS-Anordnungen. Damit wird einerseits eine komplizierte Verkabelung vermieden, anderseits kann das System beliebig erweitert werden, z.B. mit einer Steuereinheit im Fahrerstand oder in der Bahngleisleitung. Damit können z.B. Türen eines fahrerlosen Fahrzeuges über die Bahngfeisleitung gesteuert werden oder umgekehrt. Auch können weitere Systeme angeschlossen werden und somit das System leicht den jeweiligen Anforderungen angepaßt werden. Solche Systeme können z.B. das Losfahren des Fahrzeuges nur mit geschlossenen Türen autorisieren.

Bei Ausfall des Systems bzw. von Teilen des Systems können die Fahrzeugtüren und die Türen der Bahnsteigwand manuell getrennt gesteuert werden. Für eine Notöffnung der Türen sind zusätzliche nicht in der Figur gezeigte Systeme vorgesehen.

Mit einem System zu Steuerung lassen sich erfindungsgemäßen Fahrzeugtürsysteme und Bahnsteigtrennwände realisieren, die jeweils mit mehreren Kombinationen aus Türen und Steuereinheiten, einer Zentralsteuereinheit und Mitteln zum Aufbauen erster bzw. zweiter Kommunikationsverbindungen versehen sind. Damit können ganze Fahrzeuge und Haltestellen eines Verkehrsnetzes mit einem erfindungsgemäßen System erweitert, die Sicherheit und Verläßlichkeit erhöht und gleichzeitig Zeitverluste und Unfälle auf ein Minimum reduziert werden.

Mit dem System läßt sich.auch ein Verfahren zur Steuerung eines solchen Systems realisieren. Erfindungsgemäß wird zuerst eine dritte Kommunikationsverbindung 29 zwischen den ersten und zweiten Zentralsteuereinheiten (25, 27) aufgebaut, worauf dann den ersten und zweiten Kombinationen 3, 13 Paare aus je einer der Fahrzeugtüren 5 und einer der Türen der Bahnsteigwand 15 zugeordnet werden. Bei Vorhandensein eines Steuerbefehls wird dieser über die dritte Kommunikationsverbindung 29 zwischen den ersten und der zweiten Zentralsteuereinheiten 25, 27 übertragen, und anschließend zu den ersten und zweiten Steuereinheiten 9, 19 übertragen, so daß eine synchrone Ausführung des Steuerbefehls derart gewährleistet werden kann, daß die Paare nur gemeinsam öffnen oder schließen. Wenn z. B. eine Fahrzeugtür 5 außer Betrieb ist, wird von der zur Kombination gehörenden Steuereinheit 9 über die erste Kommunikationsverbindung 21 der ersten Zentralsteuereinheit 25 ein Steuerbefehl "Tür gesperrt" übertragen. Die erste Zentralsteuereinheit 25 überträgt den Steuerbefehl über die dritte Kommunikationsverbindung 29 der zweiten Zentralsteuereinheit 27. Anschließend wird der Steuerbefehl von der zweiten Zentralsteuereinheit 27 den zweiten Steuereinheiten 19 übertragen. Somit erkennen die Zentralsteuereinheit 27 und die Steuereinheiten 19, welche Tür 15 der Bahnsteigwand 11 nicht zu öffnen ist, weil die zugeordnete Fahrzeugtür 5 außer Betrieb ist.

## Patentansprüche

1. System zur gemeinsamen Steuerung von Türen einer Bahnsteigwand (11) und eines Fahrzeuges (1), insbesondere eines Schienenfahrzeuges, umfassend:
- wenigstens eine erste, vorzugsweise zwei oder mehr Kombination(en) (3, 3', 3") aus
-- einer Fahrzeugtür (5) mit wenigstens einem ersten Stellglied (7) zum Öffnen, Schließen, Stoppen, Verriegeln und/oder Entriegeln der Fahrzeugtür (5) und
-- einer ersten Steuereinheit (9) zur Steuerung des ersten Stellglieds (7),
- wenigstens eine zweite, vorzugsweise zwei oder mehr Kombination(en) (13, 13', 13") aus
-- einer Tür (15) der Bahnsteigwand (11) mit wenigstens einem zweiten Stellglied (17) zum Öffnen, Schließen, Stoppen, Verriegeln und/oder Entriegeln der Tür (15) der Bahnsteigwand (11) und
-- einer zweiten Steuereinheit (19) zur Steuerung des zweiten Stellglieds (17),
- wobei die ersten und die zweiten Kombinationen Paaren aus je einer der Fahrzeugtüren (5) und einer der Türen (15) der Bahnsteigwand (11) zugeordnet sind,
**gekennzeichnet durch**
- eine erste Zentralsteuereinheit (25),
- Mittel zum Aufbau erster Kommunikationsverbindungen (21) zwischen der ersten Zentralsteuereinheit (25) und jeder der ersten Steuereinheiten (9), wobei die erste Zentralsteuereinheit (25) ausgebildet ist, um über die ersten Kommunikationsverbindungen (21) und die ersten Steuereinheiten (9) die Steuerung eines ersten Satzes der ersten Stellglieder (7) auszulösen,
- eine zweite Zentralsteuereinheit (27),
- Mittel zum Aufbau zweiter Kommunikationsverbindungen (23) zwischen der zweiten Zentralsteuereinheit (27) und jeder der zweiten Steuereinheiten (19), wobei die zweite Zentralsteuereinheit (27) ausgebildet ist, um über die zweiten Kommunikationsverbindungen (23) und die zweiten Steuereinheiten (19) die Steuerung eines zweiten Satzes der zweiten Stellglieder (17) auszulösen,
- Mittel zum Aufbau einer dritten Kommunikationsverbindung (29) zwischen den ersten und zweiten Zentralsteuereinheiten (25, 27),
- wobei den ersten und zweiten Sätzen ein Satz der Paare der Fahrzeugtüren (5) und Türen (15) der Bahnsteigwand (11) zugeordnet ist.

2. System nach Anspruch 1, **dadurch gekennzeichnet, daß** die Mittel zum Aufbau der dritten Kommunikationsverbindung Mittel zum Aufbau einer drahtlose Kommunikationsverbindung (29) umfassen.

3. System nach Anspruch 2, **dadurch gekennzeichnet, daß** die drahtlose Kommunikationsverbindung (29) eine Verbindung mit einer Sendefrequenz zwischen 50 und 200 kHz, vorzugsweise zwischen 100 und 150 kHz, weiter bevorzugt von 120 - 130 kHz ist.

4. System nach einem der vorhergehenden Ansprüche, **dadurch gekennzeichnet, daß** jede der Zentralsteuereinheiten (25, 27) mit einer Antenne (31) ausgestattet ist.

5. System nach Anspruch 4, **dadurch gekennzeichnet, daß** die Antenne (31) vorzugsweise eine Richtantenne oder eine Induktionsantenne ist.

6. System nach einem der Ansprüche 2 bis 5, **dadurch gekennzeichnet, daß** die dritte Kommunikationsverbindung (29) eine vorgegebene maximale Reichweite aufweist.

7. System nach einem der vorhergehenden Ansprüche, **dadurch gekennzeichnet, daß** die ersten und/oder zweiten Kommunikationsverbindungen (21, 23) eine BUS-Anordnung umfassen.

8. Fahrzeugtürsystem mit einem System nach einem der vorhergehenden Ansprüche, umfassend:
- wenigstens eine, vorzugsweise zwei oder mehr der ersten Kombination(en) (3, 3', 3") aus Fahrzeugtür (5) und erster Steuereinheit (9),
- die erste Zentralsteuereinheit (25),
- die Mittel zum Aufbau der ersten Kommunikationsverbindungen (21).

9. Fahrzeugtürsystem nach Anspruch 8, **dadurch gekennzeichnet, daß** optische und/oder akustische Signaleinrichtungen zur Wiedergabe von Türzustandsdaten und/oder Informationen für Fahrgäste vorgesehen sind.

10. Bahnsteigtrennwand mit einem System nach Anspruch 1 bis 7, umfassend:
- wenigstens eine, vorzugsweise zwei oder mehr der zweiten Kombination(en) (13, 13', 13") aus Tür (15) der Bahnsteigwand (11) und zweiter Steuereinheit (19),
- die zweite Zentralsteuereinheit (27),
- die Mittel zum Aufbau der zweiten Kommunikationsverbindungen (23).

11. Bahnsteigtrennwand nach Anspruch 10, **dadurch gekennzeichnet, daß** optische und/oder akustische Signaleinrichtungen zur Wiedergabe von Türzustandsdaten und/oder Informationen für Fahrgäste vorgesehen sind.

12. Verfahren zur Steuerung eines Systems nach einem der Ansprüche 1 bis 7, umfassend die folgenden Schritte:
- Aufbau einer dritten Kommunikationsverbindung (29) zwischen den ersten und zweiten Zentralsteuereinheiten (25, 27),
- Zuordnung der ersten und zweiten Kombinationen zu den Paaren,
- Übertragung eines Steuerbefehls zwischen der ersten und der zweiten Zentralsteuereinheit (25, 27), über die dritte Kommunikationsverbindung (29),
- Übertragung des Steuerbefehls zu den ersten und zweiten Steuereinheiten (9, 19) von den ersten und zweiten Zentralsteuereinheiten (25, 27),
- synchrone Ausführung des Steuerbefehls durch die ersten und zweiten Sätze der ersten und zweiten Stellglieder (7, 17) derart, daß die Paare nur gemeinsam öffnen oder schließen.

13. Verfahren nach Anspruch 12, **dadurch gekennzeichnet, daß** der Steuerbefehl von der ersten zu der zweiten Zentralsteuereinheit (25, 27) übertragen wird.

14. Verfahren nach Anspruch 12, **dadurch gekennzeichnet, daß** der Steuerbefehl vor der Übertragung von der ersten oder zweiten Zentralsteuereinheit (25, 27) empfangen wird.

## Claims

1. System for jointly controlling doors of a platform wall (11) and of a vehicle (1), in particular of a rail vehicle, comprising:
- at least one, preferably two or more, first combination(s) (3, 3', 3") of
- a vehicle door (5) having at least a first actuator (7) for opening, closing, stopping, locking and/or unlocking the vehicle door (5), and
a first controller (9) for controlling the first actuator (7),
- at least one, preferably two or more, second combination(s) (13, 13', 13") of
- a door (15) of the platform wall (11) having at least a second actuator (17) for opening, closing, stopping, locking and/or unlocking the door (15) of the platform wall (11), and
- a second controller (19) for controlling the second actuator (17),
- wherein the first and second combinations are assigned to pairs, each consisting of one of the vehicle doors (5) and one of the doors (15) of the platform wall (11),
**characterized by**
- a first central control unit (25),
- means for establishing first communication links (21) between the first central control unit (25) and each of the first controllers (9), wherein the first central control unit (25) is designed such that it is able to initiate control of a first set of the first actuators (7) via the first communication links (21) and the first controllers (9),
- a second central control unit (27),
- means for establishing second communication links (23) between the second central control unit (27) and each of the second controllers (19), wherein the second central control unit (27) is designed such that it is able to initiate control of a second set of the second actuators (17) via the second communication links (23) and the second controllers (19),
- means for establishing a third communication link (29) between the first and second central control units (25, 27),
- wherein a set of the pairs of vehicle doors (5) and doors (15) of the platform wall (11) is assigned to the first and second sets.

2. The system according to claim 1, **characterized in that** the means for establishing the third communication link comprise means for establishing a wireless communication link (29).

3. The system according to claim 2, **characterized in that** the wireless communication link (29) is a link with a transmitting frequency between 50 and 200 kHz, preferably between 100 and 150 kHz, more preferably from 120 - 130 kHz.

4. The system according to any one of the preceding claims, **characterized in that** each of the central control units (25, 27) is equipped with an antenna (31).

5. The system according to claim 4, **characterized in that** the antenna (31) is preferably a directional antenna or an induction antenna.

6. The system according to any one of claims 2 to 5, **characterized in that** the third communication link (29) has a preset maximum range.

7. The system according to any one of the preceding claims, **characterized in that** the first and/or second communication links (21, 23) comprise a BUS arrangement.

8. Vehicle door system having a system according to any one of the preceding claims, comprising:
- at least one, preferably two or more of the first combination(s) (3, 3', 3") of vehicle door (5) and first controller (9),
- the first central control unit (25),
- the means for establishing the first communication links (21).

9. The vehicle door system according to claim 8, **characterized in that** optical and/or acoustic signal devices are provided for announcing door state data and/or information for passengers.

10. Platform partition wall having a system according to any of claims 1 to 7, comprising:
- at least one, preferably two or more of the second combination(s) (13, 13`, 13") of door (15) of the platform wall (11) and second controller (19),
- the second central control unit (27),
- the means for establishing the second communication links (23).

11. Platform partition wall according to claim 10, **characterized in that** optical and/or acoustic signal devices are provided for announcing door state data and/or information for passengers.

12. Method for controlling a system according to any of claims 1 to 7, comprising the following steps:
- establishing a third communication link (29) between the first and second central control units (25, 27),
- allocating the first and second combinations to the pairs,
- transmitting a control command between the first and the second central control units (25, 27) via the third communication link (29),
- transmitting the control command from the first and the second central control units (25, 27) to the first and second controllers (9, 19),
- synchronous execution of the control command by the first and second sets of the first and second actuators (7, 17) in such manner that the pairs only open or close together.

13. The method according to claim 12, **characterized in that** the control command is transmitted from the first to the second central control unit (25, 27).

14. The method according to claim 12, **characterized in that** the control command is received before its transmission by the first or second central control unit (25, 27).

## Revendications

1. Système de commande commune de portes d'une paroi de quai (11) et d'un véhicule (1), en particulier d'un véhicule sur rails, comprenant :
- au moins une, de préférence deux ou plus, première(s) combinaison(s) (3, 3', 3"), se composant
-- d'une porte de véhicule (5) ayant au moins un premier actionneur (7) d'ouverture, de fermeture, d'arrêt, de verrouillage et/ou de déverrouillage de ladite porte de véhicule (5), et
-- d'une première unité de commande (9) pour commander ledit premier actionneur (7),
- au moins une, de préférence deux ou plus, deuxième(s) combinaison(s) (13, 13', 13"), se composant
-- d'une porte (15) de la paroi de quai (11) ayant au moins un deuxième actionneur (17) d'ouverture, de fermeture, d'arrêt, de verrouillage et/ou de déverrouillage de la porte (15) de la paroi de quai (11), et
-- d'une deuxième unité de commande (19) pour commander ledit deuxième actionneur (17),
- lesdites premières et deuxièmes combinaisons étant associées à des paires se composant chacune de l'une des portes de véhicule (5) et de l'une des portes (15) de la paroi de quai (11),
**caractérisé par**
- une première unité centrale de commande (25),
- des moyens d'établissement de premières liaisons de communication (21) entre ladite première unité centrale de commande (25) et chacune des premières unités de commande (9), ladite première unité centrale de commande (25) étant conçue pour déclencher, via lesdites premières liaisons de communication (21) et lesdites premières unités de commande (9), la commande d'un premier jeu des premiers actionneurs (7),
- une deuxième unité centrale de commande (27),
- des moyens d'établissement de deuxièmes liaisons de communication (23) entre ladite deuxième unité centrale de commande (27) et chacune des deuxièmes unité de commande (19), ladite deuxième unité centrale de commande (27) étant conçue pour déclencher, via lesdites deuxièmes liaisons de communication (23) et lesdites deuxièmes unités de commande (19), la commande d'un deuxième jeu des deuxièmes actionneurs (17),
- des moyens d'établissement d'une troisième liaison de communication (29) entre lesdites première et deuxième unités centrales de commande (25, 27),
- auxdits premier et deuxième jeux étant associé un jeu des paires des portes de véhicule (5) et portes (15) de la paroi de quai (11).

2. Système selon la revendication 1, **caractérisé par le fait que** lesdits moyens d'établissement de la troisième liaison de communication comprennent des moyens d'établissement d'une liaison de communication sans fil (29).

3. Système selon la revendication 2, **caractérisé par le fait que** ladite liaison de communication sans fil (29) est une liaison ayant une fréquence d'émission comprise entre 50 et 200 kHz, de préférence entre 100 et 150 kHz, de préférence encore de 120 à 130 kHz.

4. Système selon l'une quelconque des revendications précédentes, **caractérisé par le fait que** chacune des unités centrales de commande (25, 27) est équipée d'une antenne (31).

5. Système selon la revendication 4, **caractérisé par le fait que**, de préférence, ladite antenne (31) est une antenne directive ou une antenne à induction.

6. Système selon l'une quelconque des revendications 2 à 5, **caractérisé par le fait que** ladite troisième liaison de communication (29) présente une portée maximale donnée.

7. Système selon l'une quelconque des revendications précédentes, **caractérisé par le fait que** lesdites premières et/ou deuxièmes liaisons de communication (21, 23) comprennent un agencement BUS.

8. Système de porte de véhicule avec un système selon l'une quelconque des revendications précédentes, comprenant :
- au moins une, de préférence deux ou plus desdites première(s) combinaison(s) (3, 3', 3") se composant de la porte de véhicule (5) et de la première unité de commande (9),
- ladite première unité centrale de commande (25),
- lesdits moyens d'établissement des premières liaisons de communication (21).

9. Système de porte de véhicule selon la revendication 8, **caractérisé par le fait que** l'on prévoit des dispositifs de signalisation optiques et/ou acoustiques destinés à reproduire des données de l'état de la porte et/ou des informations pour les passagers.

10. Cloison de quai avec un système selon la revendication 1 à 7, comprenant :
- au moins une, de préférence deux ou plus desdites deuxième(s) combinaison(s) (13, 13',13") se composant de la porte (15) de la paroi de quai (11) et de la deuxième unité de commande (19),
- ladite deuxième unité centrale de commande (27),
- lesdits moyens d'établissement des deuxièmes liaisons de communication (23).

11. Cloison de quai selon la revendication 10, **caractérisé par le fait que** l'on prévoit des dispositifs de signalisation optiques et/ou acoustiques destinés à reproduire des données de l'état de la porte et/ou des informations pour les passagers.

12. Procédé de commande d'un système selon l'une quelconque des revendications 1 à 7, comprenant les étapes suivantes :
- établissement d'une troisième liaison de communication (29) entre lesdites première et deuxième unités centrales de commande (25, 27),
- association des premières et deuxièmes combinaisons aux paires,
- transmission d'une instruction de commande entre les première et deuxième unités centrales de commande (25, 27) via ladite troisième liaison de communication (29),
- transmission de l'instruction de commande aux premières et deuxièmes unités de commande (9, 19) depuis les première et deuxième unités centrales de commande (25, 27),
- exécution synchrone de l'instruction de commande par les premier et deuxième jeux des premiers et deuxièmes actionneurs (7, 17) de manière à ce que les paires ne s'ouvrent ou ne se ferment que simultanément.

13. Procédé selon la revendication 12, **caractérisé par le fait que** l'instruction de commande est transmise de la première à la deuxième unité centrale de commande (25, 27).

14. Procédé selon la revendication 12, **caractérisé par le fait que**, avant la transmission, l'instruction de commande est reçue par la première ou la deuxième unité centrale de commande (25, 27).
